# EUROPÄISCHE PATENTSCHRIFT

(11) **EP 0 700 941 B1**
(45) Veröffentlichungstag und Bekanntmachung des Hinweises auf die Patenterteilung: **25.11.1998**
(21) Anmeldenummer: 95112505.3
(22) Anmeldetag: 09.08.1995
(51) Int. Cl.: C08F 291/02, C08F 279/04

(54) **Verfahren zur Herstellung von kautschukmodifizierten ABS-Formmassen durch nichtwässrige Polymerisation in Gegenwart von Lösungsmitteln**
Process for preparing rubber-modified ABS moulding resin by non-aqueous polymerization process in the presence of solvants
Procédé de préparation de masse de moulage ABS modifiée par du caoutchouc par polymérisation non aqueuse en présence de solvants

(30) Priorität: 18.08.1994 DE 4429320
(43) Veröffentlichungstag der Anmeldung: 13.03.1996
(73) Patentinhaber: BAYER AG, 51368 Leverkusen (DE)
(72) Erfinder: Wingler, Frank, Dr., D-51373 Leverkusen (DE); Wulff, Claus, Dr., D-47800 Krefeld (DE); Schmidt, Adolf, Dr., D-51061 Köln (DE)

(56) Entgegenhaltungen:
- EP-A- 0 054 141
- US-A- 3 984 496

## Beschreibung

Die Erfindung betrifft ein schrittweises Polymerisationsverfahren zur Herstellung von schlagzähen thermoplastisch verarbeitbaren Formmassen durch radikalisch ausgelöste Polymerisation von aromatischen Monoalkenyl-Monomeren, ethylenisch ungesättigten Nitril-Monomeren und gegebenenfalls weiteren copolymerisierbaren Vinyl-Monomeren und/oder Malein-Monomeren in Gegenwart von vorgebildetem, löslichem und gelfreiem Kautschuk als Pfropfgrundlage in Gegenwart von mindestens zwei unterschiedlichen Lösungsmitteln. Die Erfindung betrifft somit ein mehrstufiges Lösungspolymerisationsverfahren zur Herstellung von schlagzähen ABS-Formassen.

US-Patent 3,984,496 beschreibt ein Verfahren zur Herstellung von Pfropfpolymerisaten auf Basis Ethylen / Propylen Kautschuk durch Lösungs-polymerisation mittels aliphatischen und polaren Lösungsmitteln.

Das erfindungsgemäße Verfahren zeichnet sich durch einfache Polymerisationstechnik und Wirtschaftlichkeit und die erfindungsgemäßen Produkte durch hohe Schlagzähigkeit, Härte, matte Oberfläche, Wärmeformbeständigkeit sowie durch ein hervorragendes Verarbeitungsverhalten aus.

Niedrige Polymerisationstemperaturen und -drücke verleihen dem erfindungsgemäßen Verfahren eine hohe Betriebssicherheit.

Ziel der Erfindung ist ein wirtschaftliches, betriebssicheres Verfahren zur Herstellung von thermoplastisch verarbeitbaren ABS-Formmassen, das sich in technisch einfachen Geräten durchführen läßt und ABS mit guten Verarbeitungs- und Anwendungseigenschaften bei hervorragender Schlagzähwirkung des Pfropfkautschukes liefert.

Gegenstand der Erfindung ist ein Verfahren zur Herstellung von schlagzähen thermoplastisch verarbeitbaren Formmassen durch radikalisch ausgelöste Polymerisation von aromatischen Monoalkenyl-Monomeren, ethylenisch ungesättigten Nitril-Monomeren und gegebenenfalls weiteren kopolymerisierbaren Vinyl-Monomeren und/oder Malein-Monomeren in Gegenwart von vorgebildetem, löslichen Kautschuk als Pfropfgrundlage in Gegenwart von Lösungsmittel, das dadurch gekennzeichnet ist, daß man mit Hilfe von mindestens zwei verschiedenen Lösungsmitteln nämlich
(A) einem aliphatischen (C₄-C₁₀), cycloaliphatischen und/oder aromatischen Kohlenwasserstoff
und
(B) einem aliphatischen (C₁-C₈) oder cycloaliphatischen Alkohol, Keton, Ether, Ester und/oder Nitril
   1. 90 bis 20 Gewichtsteile Monoalkenylaromat-Monomere oder eine Mischung von Äquivalenten daraus,
   2. 10 bis 50 Gewichtsteile ethylenisch ungesättigtes Nitril-Monomer oder einer Mischung von Äquivalenten daraus,
   und
   3. gegebenenfalls 0 bis 30 Gewichtsteile eines weiteren, mit 1. und 2. copolymerisierenden Vinyl-, (Meth)acryl- und/oder Malein-, Fumar-, und/oder Itacon-Monomers oder eine Mischung von Äquivalenten hieraus
   in Gegenwart von
   4. 6 bis 50 Gewichtsteilen eines löslichen, gelfreien, vorgebildeten Polybutadien mit hohem cis-1,2-Anteil von 8 bis 14%, bezogen auf die Doppelbindungen, oder deren Styrol-Copolymere.
   in gerührter Lösung von
   5. 18 bis 200 Gewichtsteilen eines Lösungsmittels oder eines Lösungsmittelgemisches aus der Gruppe (A)
   6. bis zu einem Monomerenumsatz, bezogen aus Summe der polymerisierten Monomeren 1. bis 3., von bis zu maximal 45 Gewichtsprozent radikalisch initiiert polymerisiert,
   7. 18 bis 450 Gewichtsteile eines Lösungsmittels oder eines Lösungsmittelgemisches aus der Gruppe (B) zeitlich oder örtlich getrennt von der Maßgabe 4/5 zusetzt
   und
   8. die radikalisch initiierte Polymerisation im weiteren Schritt bis zu einem Monomerenumsatz, bezogen auf die Summe der polymerisierenden Monomere 1. bis 3., von 30 bis 99 Gewichtsprozent unter Durchmischen weiter führt.

Gängige Verfahren zur Herstellung kautschukmodifizierter Formmassen bedienen sich der wässrigen Emulsionspolymerisation, auf die hier jedoch nicht näher eingegangen wird. Verfahren der Masse- und Lösungspolymerisation zur Herstellung von kautschukmodifizierten Formmassen sind bekannt und in Houben Weyl, Methoden der organischen Chemie, Band E 20/Teil 1, S. 182-217, Georg Thieme Verlag Stuttgart, beschrieben. Nachteile der bekannten Verfahren sind notwendige hohe Temperaturen, die Polymerisation unter Druck, das Auftreten hoher Viskositäten, die sich nur durch aufwendige Hochviskospolymerisations-Verfahrenstechnik in u.a. Turmreaktoren, Statikmischreaktoren, Paddelreaktoren beherrschen lassen sowie die mit höheren Drücken und Temperaturen verbundenen Sicherheitsaspekte.

Die US-P 3 538 190 beschreibt ein Verfahren zur Herstellung von ABS-Harz unter Verwendung eines Lösungsmittels oder eines Gemisches von Lösungsmitteln für den Kautschuk. Solche Lösungsmittel sind aliphatische, cycloaliphatische oder aromatische Kohlenwasserstoffe wie Hexan, Toluol, Benzol, Cyclohexan. Bevorzugt werden Gemische aus aliphatischen, cycloaliphatischen und aromatischen Kohlenwasserstoffen verwendet. Diese Lösungsmittel oder Lösungsmittel-Gemische sind ausnahmslos Lösemittel für den Kautschuk. Im Laufe der Polymerisation der Monoalkenylaromat- und der ethylenisch ungesättigten Nitrilmonomeren erscheint die polymere Harzphase als dispergierte Phase in dem verwendeten Lösungsmittel und der Kautschuk bzw. der Pfropfkautschuk verbleibt in der zusammenhängenden Lösungsphase. Elektronenmikroskopische Aufnahmen der so hergestellten Produkte zeigen eine in zusammenhängender Kautschukphase dispergierte Nitril/Aromat-Harzphase mit Teilchen kleiner als 1 µm. Eine solche Zerteilung ist jedoch nicht gewünscht. Der Markt verlangt heute ABS-Harze, in denen der Kautschuk die zerteilte Phase und das Thermoplastharz die zusammenhängende Phase bilden. Der Kautschuk soll in der Regel vernetzt sein. Erscheint der Pfropfkautschuk/Kautschuk in der zusammenhängenden Phase und ist dieser vernetzt oder vergelt, so kommt es zu Verarbeitungsschwierigkeiten. Das Verfahren nach US 3 538 190 hat zwar alle Vorteile einer technisch einfachen Polymerisation ohne Einsatz einer Hochviskostechnologie oder ohne Notwendigkeit von Druckreaktoren mit ihren sicherheitstechnischen Problemen, liefert jedoch nicht die geforderten Produkte mit zusammenhängender Thermoplastharz-Phase.

Nichtwässrige Herstellverfahren zeichnen sich abgesehen von dem Vorteil, daß dabei keine Abwässer auftreten, durch verbesserte Produkteigenschaften wie Rohton, hohe Kautschukeffektivität, matte Oberflächen aus. Die Vorteile der nichtwässrigen Herstellverfahren konnten mit Vorteilen einer einfachen Reaktionsverfahrenstechnik durch Polymerisation bei niedrigen Temperaturen - bei dem erfindungsgemäßen Verfahren wird bei 60° bis etwa 120°C polymerisiert - und vorteilhaft unter Normaldruck bei niedrigen Viskositäten von unter 500 Poise mit dem erfindungsgemäßen Verfahren in Einklang gebracht werden. Ein besonderer Vorteil des erfindungsgemäßen Verfahrens ist, daß man nach diesem Verfahren auch ABS-Harze mit einem hohen Kautschukgehalt von bis etwa 40 Gew.-% herstellen kann. Solche hochkautschukhaltigen ABS-Harze werden zum Abmischen mit weiteren Thermoplasten zu Polymer-Blends benötigt. Bislang konnten solche hochkautschukhaltigen ABS-Harze nur durch wäßrige Emulsionspolymerisation hergestellt werden. Die durch das Verfahren hergestellten, erfindungsgemäßen Produkte, zeichnen sich durch hervorragende Verarbeitungs- und Gebrauchseigenschaften aus sowie durch eine bislang unerreichte vorteilhafte Kombination von Zähigkeit, Härte, Wärmeformbeständigkeit und Fließfähigkeit bei der Spritzgußbeständigkeit.

Das Wesentliche der vorliegenden Erfindung ist die Mitverwendung eines Lösungsmittels oder eines Lösungsmittelgemisches der benannten Gruppe (B). Überraschenderweise zeigt sich, daß bei Einsatz der Lösungsmittel oder -Gemische aus der benannten Gruppe (A) mit (B) in den vorgegebenen Gewichts-Verhältnissen 1:1 bis 1:2.3 der Pfropfkautschuk/Kautschuk im schlagzähen Thermoplastharz in der zerteilten Phase erscheint und das Thermoplastharz in der zusammenhängenden Phase.

Das erfindungsgemäße nichtwässrige Polymerisationsverfahren in Gegenwart von mindestens zwei verschiedenen Lösungsmitteln kann satzweise, absatzweise und kontinuierlich durchgeführt werden. Die kontinuierliche Polymerisationsfahrweise ist dadurch ausgezeichnet, daß man vorteilhaft den Kautschuk 4. gelöst in dem Lösungsmittel/Gemisch 5. getrennt von dem Lösungsmittel/Gemisch 7. in einen kontinuierlich beschickten, durchmischten und gerührten Tankreaktor bei einem stationären Monomerumsatz in erster Stufe von über 20 Gew.-%, bezogen auf die Summe der polymerisierenden Monomeren 1. bis 3., polymerisiert und die radikalisch ausgelöste Polymerisation in mindestens einer weiteren Stufe bis zu einem Monomerenumsatz, bezogen auf die Summe der polymerisierenden Monomeren 1. bis 3. von 40 bis 99 Gewichtsprozent unter Durchmischen in einem oder mehreren weiter kontinuierlich betriebenen Rührkessel(n) in Kaskade oder in einem Pfropfenströmungsreaktor und/oder einer Kombination beider Reaktortypen polymerisiert und Restmonomere und Lösungsmittel nach herkömmlichen Techniken der Polymereindampfung auf Wärmeaustauschverdampfer, Entspannungsverdampfer, Strangverdampfer, Plattenverdampfer, Dünnfilm- oder Dünnschichtverdampfer, Schneckenverdampfer entfernt und in den Prozess zurückführt.

Wesentlich hierbei ist jedoch, daß Kautschuk und Lösungsmittel (A), Maßgabe 4./5., getrennt von Lösungsmittel (B), Maßgabe 7., in die erste Stufe kontinuierlich eindosiert wird. Die Polymerisation nach Maßgabe 6. und 8. erfolgt hintereinander im seggregierten Mikromix-Zustand.

Die satz- und absatzweise erfindungsgemäße Polymerisationsfahrweise wird in einem gefüllten oder teilgefüllten durchmischten Rührkessel unter Vorlegen der Monomere und Lösungsmittel 1. bis 5., Polymerisation bis zum angegebenen Monomerumsatz von 20 bis 99 Gewichtsprozent nach Maßgaben 6. und 8., und bei zeitlich versetzter Zugabe von Lösungsmittel 7. durchgeführt, vorteilhaft nach einem Monomerumsatz von 20 bis 40 % nach Maßgabe 6.

Eine vorteilhafte Variante der absatzweisen Polymerisation ist die folgende:

In dem Reaktor wird nach Maßgabe 1. bis 5. und 6. bis 8. entweder kontinuierlich oder satzweise oder auch absatzweise hergestelltes nichtwässriges Polymermedium vorgelegt und unter Maßgabe 6. und 8. bei einem stationären Makromixumsatz von 41 bis 99 Gew.-%, bezogen auf Summe der polymerisierten Monomere 1. bis 3., in den Kessel bis zur vorgegebenen Füllung Monomere 1. bis 3., Kautschuk und Lösungsmittel 4. und 5. sowie örtlich getrennt Lösungsmittel 7. zugefahren. Die Stufen nach Maßgabe 6. und 8. werden in den seggregierten Mikromix-Einlauf- oder Einrührzonen hintereinander durchfahren. wichtig hierzu ist die getrennt Dosierung von 4./5. und 7.

Merkmal aller Varianten der Fahrweise ist die getrennte Zudosierung von 4./5. und 7., sodaß bei makroskopisch stationärem Zustand im seggrierten mikrodurchmischten Zustand die Merkmale der Maßgaben 6. und 8. hintereinander durchfahren werden, wodurch offenbar die vorteilhaften Strukturen der Pfropfkautschukteilchen entstehen.

Zur besseren Durchmischung und/oder Zerteilung des eingespeisten Kautschukes in gelöster Form kann der Polymersirup im Kreis über durchmischende und scherende Apparate gepumpt werden. Solche "Loopoperationen" sind Stand der Technik und können nach bekannten Verfahren bei der Einstellung der Teilchengröße des Kautschukes hilfreich sein.

Auch hier ist es wiederum wesentlich, daß Kautschuk und Lösungsmittel (A), Maßgabe 4./5., getrennt von Lösungsmittel (B), Maßgabe 7., eindosiert werden. die Polymerisation nach Maßgabe 6. und 8. erfolgt dann wiederum hintereinander im seggregierten Mikromix-Zusatz.

Während die örtliche und/oder zeitliche Trennung der Zuläufe von 4./5. mit Lösungsmittel (A) und von 7. mit Lösungsmittel (B) notwendig ist, ist die örtliche und/oder zeitliche Trennung der Zugabe von Monomere 1. bis 3. mit 4./5 bei der absatzweisen oder auch Zulauf-Fahrweise sowie auch bei der fortführenden oder auch kontinuierlichen Fahrweise nicht kritisch. Wesentlich und kritisch ist immer die örtliche und/oder zeitliche Trennung des Zulaufes der Lösungsmittel (A) nach Maßgabe 5. und (B) nach Maßgabe 7. Es versteht sich für den Fachmann von selber, daß bei den Maßgaben 6. und 8. Reaktionsvorgänge örtlich und/oder zeitlich hintereinander ablaufen, wobei Umsatzbereiche sich überlappen können.

Von einer Durchmischung spricht man, wenn die Einmischzeit bis zur 99 % makroskopischer Durchmischung kleiner als 1/5 der mittleren Verweilzeit ist. Die mittlere Verweilzeit über die Stufen der Maßgeber 6 und 8 beträgt 2 bis 16 Stunden. Die Polymerisation wird vorteilhaft bei 60 bis 120°C, vorzugsweise am Siedepunkt des Lösungsmittel/Polymer-Gemisches durchgeführt. Es ist vorteilhaft, die Polymerisation bei Normaldruck auszuführen, möglich ist aber auch die Polymerisation bei geringem Überdruck bis zu 3 bar.

Dem Fachmann ist bekannt, daß es bei gerührten und durchmischten Polymerisationsverfahren, insbesondere in viskosen Zuständen zu Seggregationen kommen kann, insbesondere in näheren Umgebungen der Einlaufzonen. Der sogenannte "MAKROMIX"-Bereich ist global als Integration über den gesamten Reaktorinhalt anzusehen. Im Mikrobereich kann es durchaus zu Bereichen unterschiedlicher Zusammensetzungen und Umsätze kommen; man sprich im MIKRO-durchmischten Bereich von Seggregation. Die theoretische Vorstellung ist die einer Satzpolymerisation in kleinen "Beutelchen", deren Hülle sich im Laufe der weiteren Polymerisation oder auch Durchmischung auflösen und den Inhalt zur Verteilung an den globalen Gesamt-Reaktor-Inhalt frei geben.

Die Zähigkeiten der gerührten oder transportierten Medien bewegen sich im Bereich von maximal 500 Poise, vorzugsweise bei maximal etwa 100 Poise.

Die Isolierung des Pfropfpolymerisates erfolgt nach bekanntem Stand der Technik durch Fällen in Lösemittel, durch Strippen mit Wasser und/oder Wasserdampf oder durch Eindampfen zur Polymerschmelze auf Entspannungsverdampfern, Strangverdampfern, Wendelrohrverdampfern, Dünnfilmverdampfern, gewissen Dünnschichtverdampfern, Fallfilmverdampfern, Plattenverdampfer, Schneckenverdampfern etc.

Man kann auch in gerührten Mehrphasen-Verdampfern mit Knet- und Abstreifvorrichtungen bis zur Polymerschmelze nach Stand der Technik Lösemittel und Restmonomere entfernen. Die Mitverwendung von Treib- und Schleppmittel, wie u.a. Wasserdampf, ist möglich. Während der Polymerisolierung können Zusatzstoffe, Stabilisatoren, Alterungsschutzmittel, Füllstoffe, Gleitmittel zugesetzt werden. Diese können nach Stand der Technik zu Beginn der Polymerisation den Ausgangslösungen oder nach der Polymerisation dem Polymeren zugesetzt werden.

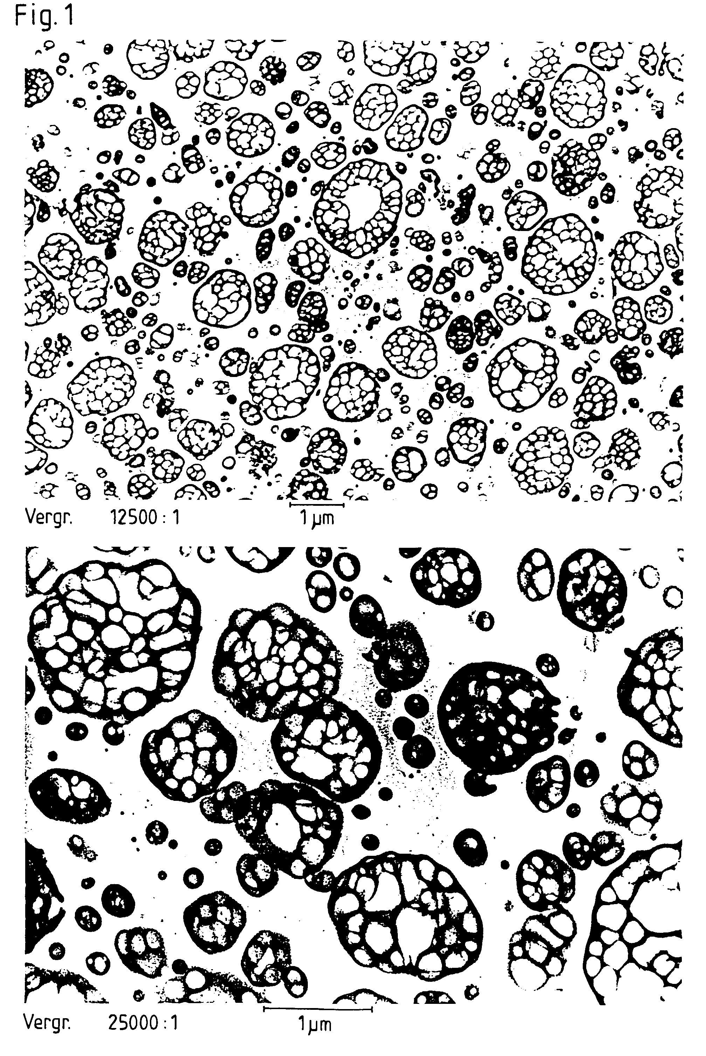

Überraschenderweise zeigen die nach dem erfindungsgemäßen Verfahren hergestellten schlagzähen ABS-Formmassen nach Kontrastierung mit Osmiumtetroxid in elektronenmikroskopischer Aufnahme eine polymodale Größenverteilung des Pfropfkautschukes mit hohem Innenpfropfanteil und großem "rubber phase volume". Solche Verteilungen und Strukturen, wie z.B. in Fig. 1 wiedergegeben (Fig. 1 zeigt eine TEM-Aufnahme zu Beispiel 1; Ultra-Dünnschnitt + OsO₄, in der oberen Hälfte Vergrößerung 12500:1, in der unteren 25000:1), liefern bekannterweise vorteilhafte Verarbeitungs- und Gebrauchseigenschaften und sind Ziel etlicher verfahrenstechnischer Bemühungen wie z. B. in US 5.166.261 offenbart. Die Pfropfkautschukteilchen haben Durchmesser von < 0,1 bis 10 µm. Es können auch je nach Rezeptur "chaotische" Kautschuk-Strukturen mit zerrissenen Kautschuklamellen entstehen. Gemeinsame Merkmale der bei den nach dem erfindungsgemäßen Verfahren entstehenden Strukturen der Kautschukteilchen ist die polymodale Größenverteilung und die anscheinend "chaotisch" anmutende Vielgestaltigkeit der Kautschukteilchen.

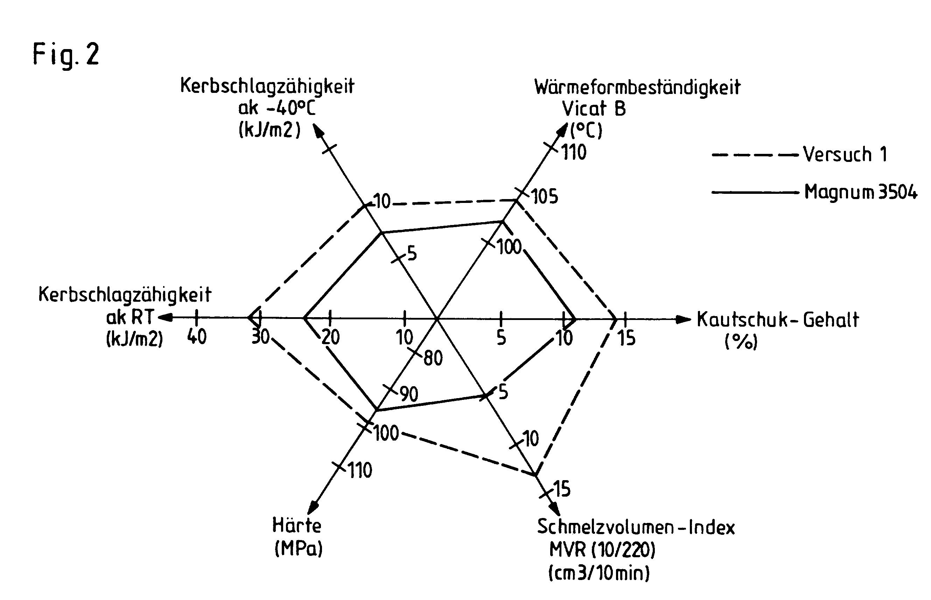

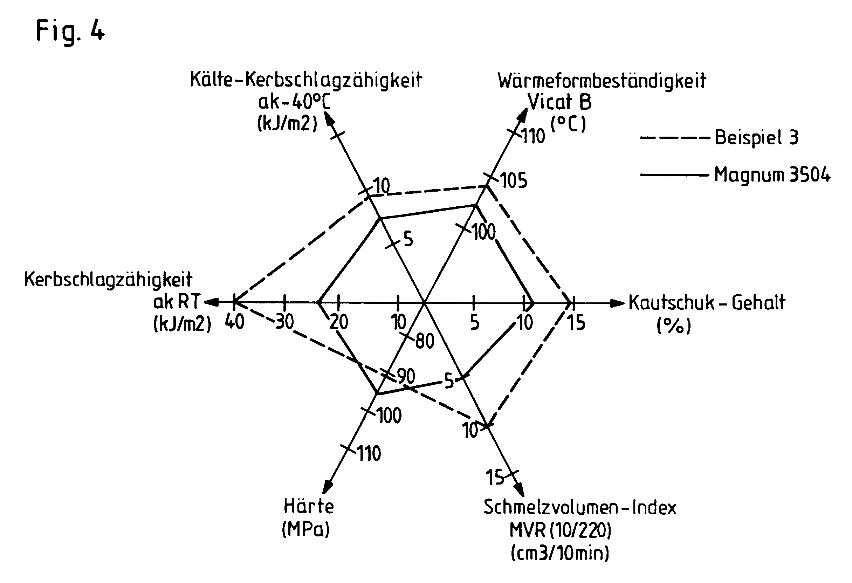

Aus den Schubmodulverläufen im Torsionsschwingungsversuch läßt sich ebenfalls auf ein hohes Weichphasenvolumen und auf einen hohen Innenpfropfanteil schließen. Das Weichphasenvolumen beträgt etwa das Doppelte des eingesetzten Kautschukanteils, wie an der großen Fläche des Peaks G" der Schubmodulkurve in Abb. 2 und 4 zu ersehen ist. Der Pfropfkautschuk/Kautschuk, der das Weichphasenvolumen im ABS-Harz ausmacht, besitzt eine sehr hohe Effizienz.

Die Schubmodulverläufe zeigen auch die hohen Glasübergangstemperaturen von über 104°C.

Lösungsmittel der Gruppe (A) sind aliphatische Kohlenwasserstoffe wie Butan, Pentan, Hexan, Heptan, Octan bzw. deren Iso-Derivate, cycloaliphatische Kohlenwasserstoffe wie Cyclopentan, Cyclohexan, Alkyl-cyclopentan, Alkyl-cyclohexan, aromatische Kohlenwasserstoffe wie Benzol, Toluol, Xylole, Ethylbenzol. Bevorzugt werden Hexan, Toluol und Ethylbenzol.

Lösungsmittel der Gruppe (B) sind Alkohole wie Methanol, Ethanol, Propanol, Isopropanol, Butanol, Isobutanol, tert.-Butanol, Amylalkohol, Isoamylalkohol, Isooctanol, Cyclohexanol; Ketone wie Aceton, Methyl-ethylketon, Methylisopropylketon, Cyclopentanon, Cyclohexanon; Ether wie Tetrahydrofuran, Dioxan, Ethylenglykoldimethyl, -diethyl, -dipropyl, -diisoproylether; Ester wie Etylacetat, Propylacetat, Butylacetat u.a., Nitrile wie Acetonitril, Propionitril, Butyronitril. Bevorzugt wird Methyl-ethylketon und Tetrahydrofuran.

Zur Einstellung der Molmassen werden dem Stand der Technik gemäß übliche Molmassenregler wie Mercaptane und Olefine, z.B. tert.-Dodecylmercaptan, Cyclohexen, Terpinolen u.v. in Mengen von 0,05 bis 1,0 Gew.-%, bezogen auf copolymerisierende Monomere 1. bis 3., eingesetzt.

Geeignete Initiatoren für die radikalische Polymerisation sind pfropfaktive, in Radikale zerfallende Peroxide und/oder Azo-Verbindungen. Hierzu gehören u.a. Azodiisobuttersäuredinitril, Azoisobuttersäure-alkylester, tert.-Butylperester wie tert.-Butyl-perpivalat oder -peroctoat, oder -perbenzoat, oder -perneodecanoat. Geeignete Radikalstarter sind auch Peroxiddicarbonate wie Dicyclohexylperoxidicarbonat, Di-isopropylperoxidicarbonat, Di-ethylhexylperoxidicarbonat. Diese Initiatoren werden in Mengen von 0,01 bis 0,5 Gew.-%, bez. auf Monomere 1. bis 3., verwendet.

Weiter können während der Polymerisation oder im Anschluß vor der Aufarbeitung übliche Zusatzmittel wie Farbstoffe, Antioxidantien, Gleitmittel, Stabilisatoren, wie dem Fachmann bekannt, zugesetzt werden.

Als Kautschuk für die Pfropfkautschukgrundlage kommen pfropfbare, lösliche Kautschuke mit niedrigem Gelanteil in Frage. Das sind Polybutadiene mit hohem cis-1,2-Anteil von 8 bis 14 %, bez. auf die Doppelbindungen, der Molmassen (Gewichtsmittel) vorzugsweise von 50.000 bis 500.000, deren Styrol-Copolymere in statistischer oder Block-Form, vorzugsweise deren verzweigte oder sternförmige Polymere wie sie Stand der Technik zur Herstellung von "Lösungs-" oder "Masse-ABS" sind.

Monoalkenyl-Aromat-Monomere der Gruppe 1. sind Styrol, α-Methylstyrol, kernsubstituierte Alkylstyrole, kernsubstituierte Chlorstyrole.

Ethylenisch ungesättigte Nitrile der Gruppe 2. sind Acrylnitril, Methacrylnitril.

Copolymerisierende Monomere der Gruppe 3. sind Acrylmonomere wie Methyl(meth)acrylat, Ethyl-(meth)acrylat, tert.-Butyl(meth)acrylat, Ester der Fumar-, Itaconsäure, Maleinderivate wie Maleinsäureanhydrid, Maleinsäureester, N-substituierte Maleinimide wie vorteilhaft N-Cyclohexyl- oder N-Phenyl-Maleinimid, N-Alkyl-Phenyl-Maleinimide, weiter Acrylsäure, Methacrylsäure, Fumarsäure, Itaconsäure oder deren Amide, wie dem Fachmann als copolymerisierende Momonere zur Herstellung von "ABS"-Formmassen bekannt.

Die nach dem erfindungsgemäßen Verfahren hergestellten ABS-Harze können nach herkömmlichen Stand der Technik mit weiteren Thermoplasten compoundiert werden, u.a. mit Polystyrol-co-Acrlynitril, Poly-a-methylstyrol-co-Acrylnitril, Polycarbonat und aromatischen Polyesterharzen.

### Beispiele

### 1. Beispiel einer Satzfahrweise mit Toluol als Lösungsmittel (A):

In 540 g Toluol werden 259 g Poly-cis-Butadien mit einem 1,2-Vinylanteil von 11 % der Doppelbindungen und einem 1,4-Cis-Anteil von 38 % der Doppelbindungen ("Buna CB HX 502 C", Bayer Elastomeres France) zusammen mit 0,26 g 2,5-Di-tert.-Butylphenol bei 60°C unter N₂ gelöst und hierzu werden 1331 g Styrol eingerührt. Nach vollständigem Lösen werden 570 g Acrylnitril und 6,65 g tert.-Dodecylmercaptan hinzugefügt und in einem 6-Liter Laborreaktor mit wandgängigem Rührer auf 75°C bei Normaldruck erwärmt.

Es werden nun 1,2 g tert.-Butylperpivalat in 570 g Toluol eingerührt. Die Viskosität steigt innerhalb einer Stunde stark an. Nach 60 Min. beträgt der Umsatz, bezogen auf Styrol und Acrylnitril, ermittelt durch Feststoffbestimmung einer Eindampfprobe bei 200°C 38 Gew.%. Nun werden innerhalb von 20 Min. 360 g Methylethylketon (2-Butanon) zusammen mit 4,8 g tert.-Dodecylmercaptan eingerührt. Die Viskosität der Reaktionsmischung fällt stark ab. Die Temperatur wird nun auf 82°C erhöht und dann werden weitere 1080 g Methylethylketon (2-Butanon) zusammen mit 5,3 g tert.-Butylperoctoat und 2,2 g p-2.5-Di-tert.butylphenol-propionsäure-octylester (Irganox 1076®; Ciba Geigy) in 3 Stdn. eingerührt und 12 Stdn. bei 90°C nachpolymerisiert. Der Umsatz, bezogen auf Styrol und Acrylnitril, beträgt 92 %. Die viskose Lösung wird zu einem Film ausgegossen und getrocknet. Die Transmissions-Elektronen-Mikroskopie (TEM) eines mit OsO₄ angeätzten Ultradünnschnittes (Fig. 1) (Vergrößerung 12500:1 bzw. 25000:1) zeigt den Pfropfkautschuk in einer polymodalen Größenverteilung von 0,1 bis 1,5 µm, mit einem hohen "Innenpfropfanteil". Der Kautschukgehalt, bestimmt durch Bilanzierung des Ansatzes, beträgt 13 Gew.-%. Der Styrolgehalt der PSAN-Matrix beträgt 72 Gew.-% und der Acrylnitrilgehalt 28 Gew.-%.

Das bei Zimmertemperatur auf Abdampfschalen getrocknete Material wird granuliert und auf einem Entgasungsextruder von Restflüchtigen befreit und granuliert.

Der Restgehalt an Toluol beträgt 120 ppm, an Styrol 43 ppm, an Acrylnitril 1,5 ppm.

Bedingungen des Spritzgußes zu Normkleinstäben:

| | |
|---|---|
| Massetemperatur | 230°C |
| Werkzeugtemperatur | 60°C |
| Einspritzzeit | 2,8 Sek. |

Die Spritzkörper zeigen eine matte Oberfläche.

Der Reflektometerwert der Oberflächenglanzbestimmung beträgt 18 (T_{w}= 70°/20°C).

Das thermoplastische ABS-Harz weist eine günstige Relation von Fließfähigkeit, Härte, Kerbschlagzähigkeit bei hellem Rohton auf:

| | | | |
|---|---|---|---|
| aₖ-IZOD (kJ/m²) | 23°C | | 30 |
| " | -40°C | | 16 |
| MVI | (10/200°C) | (cm³/10 Min.) | 27 |
| Vicat B/120 | (°C) | | 104 |
| Härte (MPa) | | | 98 |

Die Kerbschlagzähigkeit wurde bei Zimmertemperatur (aₖRT) und bei -40°C (aₖ-40°C) nach ISO 180/1A (Einheit: kJ/m²) ermittelt, die Härte wurde nach DIN 53 456 (Einheit: N/mm²) und die Wärmeformbeständigkeit nach Vicat (Methode B) gemäß DIN 53 460 (Einheit: °C) gemessen. Die Verarbeitbarkeit wurde durch Messung des Volumen-Fließindex MVI nach DIN 53 735 U (Einheit: cm³/10 min) charkaterisiert: die Glanzmessung wurde entsprechend DIN 67 530 an einer ebenen Platte bei einem Reflektionswinkel von 60° (Reflektometerwert) mit Hilfe des Mehrwinkel-Reflektometers "Multi-Gloss" der Firma Byk-Mallinckrodt durchgeführt.

### 2. Beispiel einer Herstellung von ABS durch "Satzfahrweise" mit Toluol als Lösungsmittel (A):

In 750 g Toluol werden 320 g Poly-cis-Butadien ("Buna CB HX 502 C", Bayer Elastomers France) zusammen mit 0,32 g 2,5-Di-tert.-Butylphenol unter N₂ bei 60°C gelöst und hierzu werden danach 921,6 g Styrol eingerührt. Nach vollständigem Mischen werden 358,4 g Acrylnitril eingerührt und 5,12 g tert.-Dodecylmercaptan hinzugefügt und in einem 5-Liter-Laborreaktor mit wandgängigem Rührer bei Normaldruck auf 75°C erwärmt.

Es werden nun 0,77 g tert.-Butylperpivalat in 80 ml Toluol eingerührt. Die Viskosität steigt innerhalb einer Stunde Rührens stark an. Nun werden 700 ml Methylethylketon zusammen mit 2,56 g tert.-Dodecylmercaptan innerhalb von 30 Minuten zugetropft und eingerührt. Die Viskosität der Reaktionsmischung fällt ab. Man erhöht die Temperatur auf 80°C und es werden dann weitere 400 ml Methylethylketon zusammen mit 0,96 g tert.-Butylperpivalat innerhalb von 4 Stunden eingerührt. Danach wird mit 100 ml Methylethylketon und 0,64 g tert.-Butylperoctoat nachaktiviert und bei 87°C weitere 4 Stunden nachgerührt.

Der Feststoffgehalt beträgt 31 Gew.-%, der Umsatz, bezogen auf Styrol- und Acrylnitrilmonomere, 56,5 Gew.-% und der Kautschukgehalt des Polymerisates 30,8 Gew.-%.

Die Polymerisatlösung wird auf einer 32 mm selbstreinigenden Gleichdrall-Laboreindampfschnecke bei 160 bis 240°C unter Zusatz von 16 g Paraffinöl und 1,60 g IRGANOX-1076® vom Lösungsmittel befreit, die Schmelze zu einem Strang gezogen und granuliert.

Das Granulat wird im Gewichtsverhältnis 1:1,2 mit einem in Masse hergestellten Styrol/Acrylnitril-Copolymerisat auf einem Laborextruder gemischt und zu Normkleinprüfstäben abgespritzt.

Bedingungen des Spritzgusses zu Normkleinstäben:

| | |
|---|---|
| Massetemperatur | 320°C |
| Werkzeugtemperatur | 60°C |
| Einspritzzeit | 2,8 Sek. |

Die Spritzgußkörper zeigen eine matte Oberfläche. Der Restacrylnitril-Gehalt beträgt 1,7 ppm.

Das so erhaltene thermoplastische ABS-Harz weist eine einzigartige Kombination von Fließfähigkeit, Härte, Kerbschlagzähigkeit und Wärmeformbeständigkeit bei einem hellen Rohton und einem niedrigen Restmonomer-Acrylnitril-Gehalt auf:

| | | |
|---|---|---|
| Kerbschlagzähigkeit (aₖ-IZOD) | [kJ/m²] 23°C | 33 |
| " | -40°C | 10 |
| Schmelzvolumenindex | (MVI) [10/220] [cm³/10 min] | 17 |
| Wärmeformbeständigkeit | (Vicat B/120) | 104°C |
| Härte | (MPa) | 98 |

Zum Vergleich wurde ein handelsübliches, durch nichtwäßrige Polymerisation nach einem Masseverfahren hergestelltes ABS ("Magnum 3502", DOW) vermessen. Die Prüfdaten sind in der Fig. 2 in einer Hexaeder-Darstellung gegenübergestellt.

Man erkennt unschwer eine in allen Prüfdaten verbesserte, vorteilhaftere Kombination der Eigenschaften.

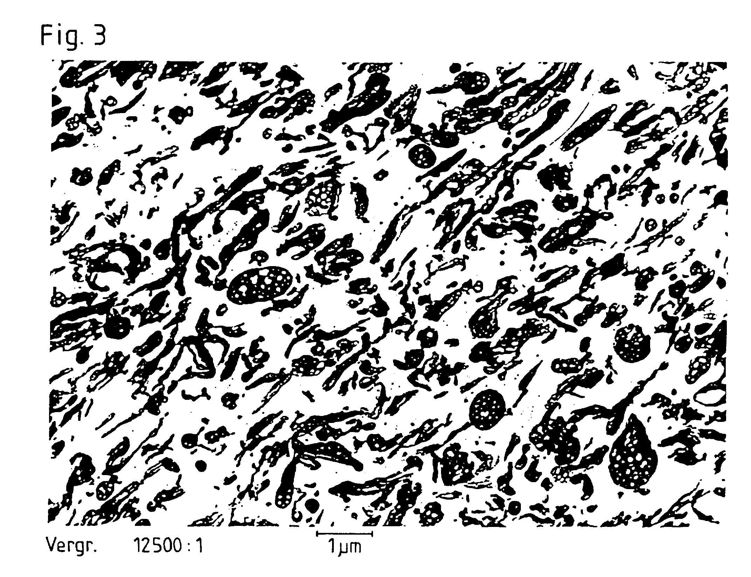

Die Fig. 3 zeigt eine TEM-Aufnahme eines mit OsO₄ angeätzten Mikroschnittes des erfindungsgemäßen Produktes nach Beispiel 2. Man erkennt die polymodale und polymorphologische Kautschuk-Größen- und Form-Verteilung.

### 3. Beispiel einer Herstellung von ABS durch "Satzfahrweise" mit Toluol als Lösungsmittel (A):

In 540 g Toluol werden 260 g Poly-cis-Butadien ("Buna CB HX 502 C", Bayer Elastomere France) zusammen mit 0,26 g Di-tert.-Butylphenol ("IONOL®") unter N₂ bei 60°C gelöst und hierzu werden 1331 g Styrol und 9,6 g tert.-Dodecylmercaptan eingerührt. Nach vollständigem Mischen werden 570 g Acrylnitril eingerührt und in einem 6 Liter Versuchskessel mit Rückflußkühler unter N₂ bei Normaldruck auf 75°C erwärmt. Der möglichst wandgängige Ankerrührer wurde mit 60 U/Min. gedreht.

Es werden nun 1,14 g tert.-Butylperpivalat Lff. in 72 g Toluol eingerührt. Die Viskosität steigt innerhalb von 45 Min. an. Innerhalb von 30 Minuten rührt man 360 g Methylethylketon (Butanon-2) zusammen mit 1,9 g tert.-Dodecylmercaptan ein. Die Viskosität fällt hierbei deutlich ab. Man erhöht die Temperatur auf 80°C und es werden dann weitere 1080 g Methylethylketon zusammen mit 5,3 g tert.-Butylperoctoat Lff. innerhalb von 3 Stunden eingetropft. Die Temperatur wird dem Siedeverlauf entsprechend langsam auf 87°C angehoben. Man rührt noch 8 Stunden nach und stabilisiert durch Zugabe von 100 g Methylethylketon, 22 g Paraffinöl und 2,2 g IRGANOX 1076®, Ciba-Geigy.

Die Polymerlösung wird auf einer selbstreinigenden 32 mm Labor Gleichdrall-Eindampfschnecke eingedampft und auf einem Zweiwellen-Laborextruder homogenisiert und der erhaltene Strang granuliert.

Der Kautschukgehalt wurde im Infrarot zu 14,7 Gew.-% bestimmt durch Messungen der Absorptionen bei 975, 914, 760, 706 cm⁻¹ im Vergleich zu Eichmischungen.

Bedingungen des Spritzgusses zu Normkleinstäben wie im Beispiel 2.

Die Spritzgußkörper zeigen eine matte Oberfläche, der Restacrylnitril-Gehalt beträgt 1,6 ppm.

Das so erhaltene thermoplastische ABS-Harz weist eine einzigartige Kombination von Fließfähigkeit, Härte, Kerbschlagzähigkeit und Wärmeformbeständigkeit bei einem hellen Rohton und einem niedrigen Restmonomer-Acrylnitril-Gehalt auf:

| | | |
|---|---|---|
| Kerbschlagzähigkeit (aₖ-IZOD) | [kJ/m²] 23°C | 40 |
| " | -40°C | 9 |
| Schmelzvolumenindex | (MVI) [10/220] [cm³/10 min] | 10 |
| Wärmeformbeständigkeit | (Vicat B/120) | 104°C |
| Härte | (MPa) | 92 |

Zum Vergleich dient das handelsübliche, durch nichtwäßrige Polymerisation nach einem Masseverfahren hergestellte ABS ("Magnum 3502", DOW), das in Beispiel 2 bereits verwendet wurde. Die Prüfdaten sind in der Fig. 4 in einer Hexaeder-Darstellung gegenübergestellt.

Man erkennt unschwer eine in allen Prüfdaten verbesserte, vorteilhaftere Kombination der Eigenschaften.

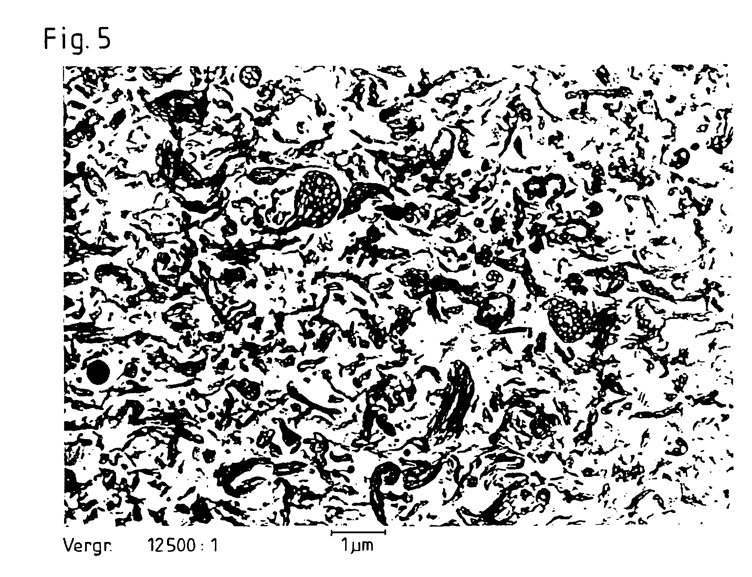

Die Fig. 5 zeigt eine TEM-Aufnahme eines mit OsO₄ angeätzten Mikroschnittes des erfindungsgemäßen Produktes nach Beispiel 3. Man erkennt wiederum die polymodale und polymorphologische Kautschuk-Größen- und Form-Verteilung.

### 4. Beispiel einer Satzfahrweise mit n-Hexan als Lösungsmittel (A)

Eine Lösung von 192 g Poly-cis-Butadien ("Buna CB HX 502 C") in 450 g n-Hexan wird mit 706 g Styrol versetzt. Nach vollständigem Mischen wird auf 60°C unter N₂ und Rühren erwärmt und 302,5 g Acrylnitril zusammen mit 3,5 g tert.-Dodecylmercaptan werden hinzugefügt und in einem 5 Liter Laborreaktor bei Normaldruck erwärmt. Man erhöht die Temperatur des Reaktormantels auf 75°C und gibt 1,0 g tert.-Butylperpivalat in 60 g n-Hexan zu. Die Viskosität steigt innerhalb der nächsten 100 Min stark an. Nun werden innerhalb von 30 Min. 300 g Methylethylketon (2-Butanon) zusammen mit 2,5 g tert.-Dodecylmercaptan eingerührt und die Reaktorwandtemperatur auf 82°C erhöht. Innerhalb von 3 Stunden werden weitere 900 g Methylethylketon zusammen und 2,8 g tert.-Butylperoctoat eingerührt und gleichzeitig über eine kurze Vigreux-Kolonne werden 535 g eines n-Hexan-Gemisches mit 8 % Acrylnitril abdestilliert. Gleichzeitig werden 60 ml frisches Acrylnitril in den Ansatz nachgesetzt. Man rührt noch 12 Stunden bei 82°C Wandtemperatur nach. Die Lösung wird auf einer 32 mm ZSK-Gleichdrall-Labor-Eindampfschnecke eingedampft. Der Feststoff wird zusammen mit 410 g in Masse hergestelltem Styrol-Acrylnitril-Copolymerisat mit einem Acrylnitril-Gehalt von 28 % in einer konischen entgegengesetzt drehenden Zweiwellen-Laborschnecke der Firma Haake, Karlsruhe, bei 117 U/min gemischt, extrudiert und granuliert, so daß im Endprodukt ein Kautschukgehalt von 14 Gew.-% resultiert.

Bedingungen des Spritzgusses zu Normkleinstäben:

| | |
|---|---|
| Massetemperatur | 230°C |
| Werkzeugtemperatur | 60°C |
| Einspritzzeit | 2,8 Sek. |

Die Spritzkörper zeigen eine matte Oberfläche. Das Material ist milchig, leicht durchscheinend.

| | | | |
|---|---|---|---|
| Kerbschlagzähigkeit nach ISO 180/1A | | | |
| (kJ/m²) | 23°C | 31 | |
| MVI | (10/200°C) | (cm³/10 Min.) | 14 |
| Glasübergangstemperatur der Harzphase (bestimmt im Torsionsschwingungsversuch) | | | 108°C |
| Glasübergangstemperatur der Weichphase (bestimmt im Torsionsschwingungsversuch) | | | -95°C |

### 5. Beispiel einer Herstellung von ABS durch "Satzfahrweise" mit n-Hexan als Lösungsmittel (A):

In 350 g n-Hexan werden 137,5 g Poly-cis-Butandien ("Buna CB HX 502 C") unter N₂ zusammen mit 0,14 g 2,5 Di-tert.-Butylphenol gelöst und hierzu werden 705,6 g Styrol eingerührt. Nach vollständigem Mischen werden 302,4 g Acrylnitril und 3,5 g tert.-Dodecylmercaptan hinzugefügt und in einem 5-Liter-Laborreaktor mit wandgängigem Rührer auf 75°C erwärmt. Innerhalb von 10 Minuten werden 1,0 g tert.-Butyl-perpivalat in 60 g n-Hexan zugegeben. Innerhalb von 115 Minuten steigt die Viskosität an. Nun werden 300 g Methylethylketon zusammen mit 2,5 g tert.-Dodecylmercaptan innerhalb von 30 Minuten eingerührt. Danach wird eine Mischung aus 450 g Methylethylketon und 49 g Acrylnitril innerhalb von 4 Stunden eingetropft und gleichzeitig wird das Hexan über eine Kolonne aus dem Reaktionsgemisch herausdestilliert. Innerhalb dieser 4 Stunden werden 2,82 g tert.-Butylperoctoat in 50 ml Methylethylketon zur Aktivierung hinzugegeben. Man rührt 8 Stunden nach und setzt 1,5 g Stabilisator hinzu.

Aus dem Feststoff und der Gewichtsbilanz des Reaktorinhaltes ergibt sich ein Umsatz von 84 %, bezogen auf Styrol und Acrylnitril, und ein Kautschukgehalt von 14 %. Die Lösung wird, wie im Versuch 1 beschrieben, auf der Gleichdrall-Laborschnecke zusammen mit 16 g Paraffinöl und 1,6 g IRGANOX-1076® eingedampft und das ABS zu Prüfkörpern verspritzt.

Das so erhaltene thermoplastische ABS-Harz weist eine einzigartige Kombination von Fließfähigkeit, Härte, Kerbschlagzähigkeit und Wärmeformbeständigkeit bei einem hellen Rohton, matter Oberfläche der Prüfkörper und niedrigem Restmonomer-Acrylnitril-Gehalt auf:

| | | |
|---|---|---|
| Kerbschlagzähigkeit (aₖ-IZOD) | [kJ/m²] 23°C | 33 |
| " | -40°C | 11 |
| Schmelzvolumenindex | (MVI) [10/220] [cm³/10 min] | 14 |
| Wärmeformbeständigkeit | (Vicat B/120) | 104°C |
| Härte | (MPa) | 99 |

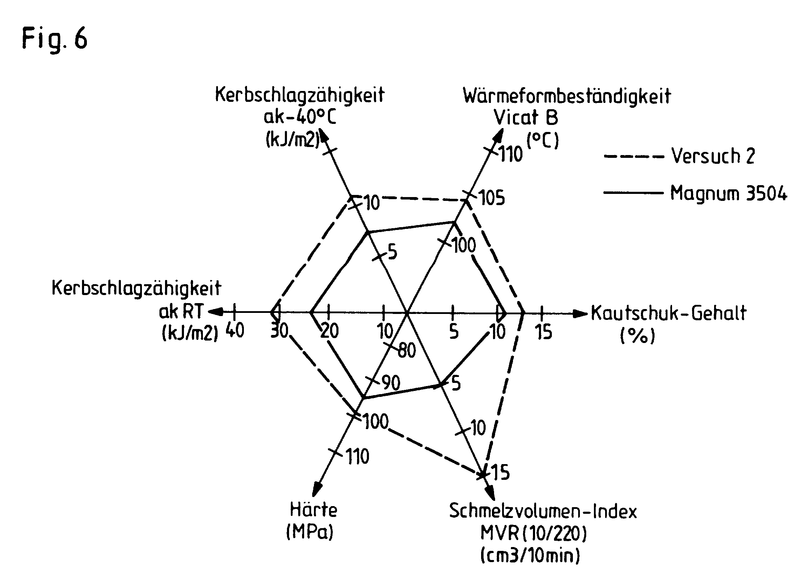

Zum Vergleich wurde das handelsübliche, durch nichtwäßrige Polymerisation nach einem Masseverfahren hergestellte ABS ("Magnum 3502", DOW), das auch in Beispiel 2 verwendet wurde, benutzt. Die Prüfdaten sind in der Fig. 6 in einer Hexaeder-Darstellung gegenübergestellt.

Man erkennt unschwer eine in allen Prüfdaten verbesserte, vorteilhaftere Kombination der Eigenschaften.

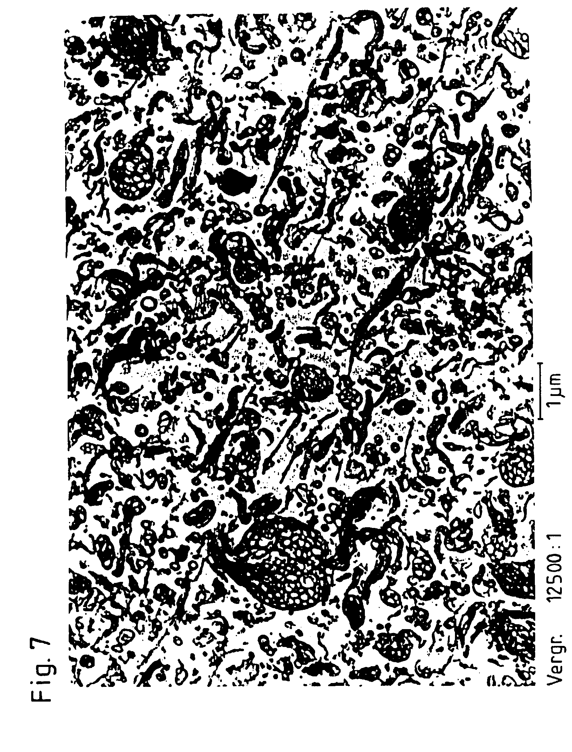

Die Fig. 7 zeigt eine TEM-Aufnahme des mit OsO₄ angeätzten Mikroschnittes des erfindungsgemäßen Produktes gemäß Beispiel 5. Man erkennt eine polymodale und polymorphologische Kautschuk-Größen- und Form-Verteilung, wie sie in dieser Form noch nicht bekannt war.

### 6. Beispiel einer Zulauffahrweise

In einem 5 Liter Laborreaktor mit wandgängigem Rührer werden 280 g Polymerlösung aus dem Versuch des Beispiels 1 vom Feststoff 47 Gew.% vorgelegt und mit 50 g Methylethylketon (2-Butanon) verdünnt. Man erwärmt unter Rühren und unter N₂ den Ansatz auf 87°C und dosiert folgende Zuläufe getrennt, zeitgleich innerhalb von 8 Stdn. unter Rühren.

| | |
|---|---|
| I. 600 ml einer Mischung aus | 99,8 Gew.-% Methylethylketon |
| | 0,12 Gew.-% tert.-Butylperpivalat |
| | 0,08 Gew.-% tert.Butylperoctoat |
| II. 1400 ml. einer Mischung aus | 33,0 Gew.-% Toluol |
| | 11 Gew.-% gelöstem Buna CB |
| | HX 502 C |
| | 40 Gew.-% Styrol |
| | 16 Gew.-% Acrylnitril |
| | 0,1 Gew.-% tert.-Dodecylmercaptan |

Nach einiger Zeit stellt sich ein quasistationärer Umsatz von 40 bis 45 Gew.%, bezogen auf Styrol und Acrylnitril, ein. Man rührt bei 87°C noch 3 Stunden nach Beendigung des Zulaufes von I. und II. nach. Der Umsatz steigt auf 62 Gew.%. Der Kautschukanteil im ABS-Harz beträgt 26 Gew.-%. Man läßt das Lösungsmittelgemisch in Abdampfschalen abdampfen. Das noch Restlösungsmittel und Restmonomere enthaltende Polymerisat wird in gleichen Gewichtsteilen mit einem in Masse hergestelltem Styrol/Acrylnitril-Copolymerisat (SAN-Harz) mit einem Acrylnitrilgehalt von 28 % Gew.-% gemischt und auf einem Entgasungsextruder von Restflüchtigen befreit, so daß ein ABS mit einem Kautschukgehalt von 13 % resultiert.

| Prüfergebnisse gemessen an Spritzgußkörpern | |
|---|---|
| Massetemperatur 230°C | |
| Werkzeugtemperatur 60°C | |
| Einspritzzeit 2,8 Sek. | |
| Reflektometerwert (T_{w}= 70°C/20°) | 35 |
| aₖ-IZOD (kJ/m²) 23°C | 34 |
| " -40°C | 20 |
| MVI (10/220) (cm³/10 Min.) | 14 |
| Vicat B/120 | 99 |
| Härte (MPa) | 95 |

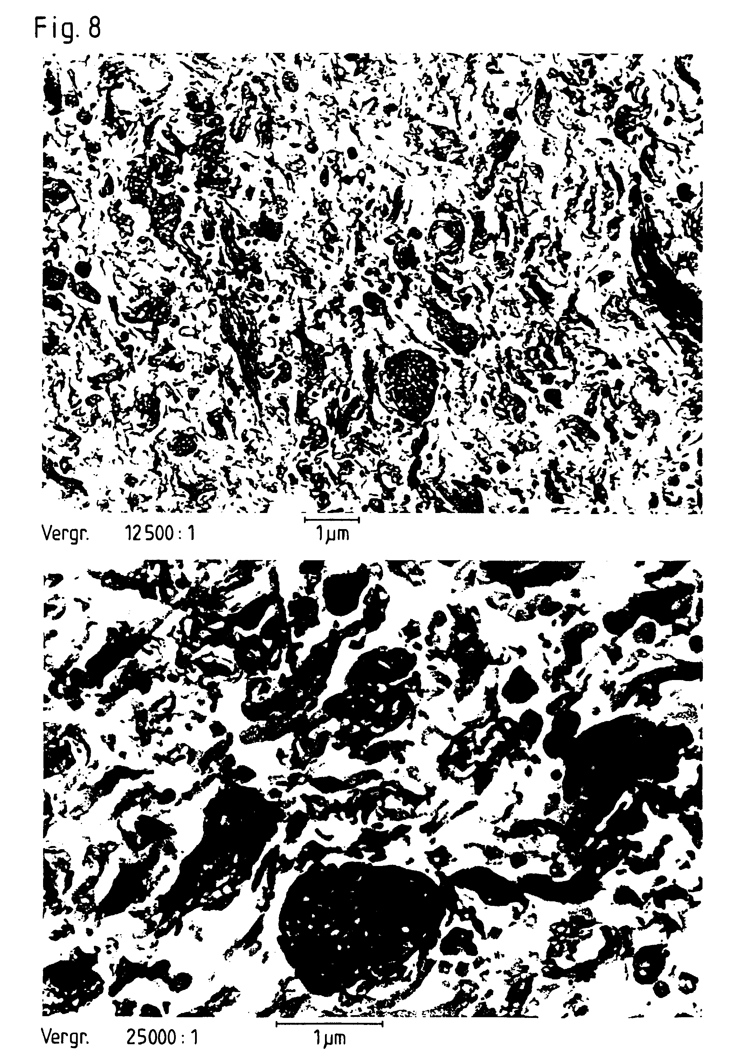

Fig. 8 ist eine TEM-Aufnahme dieses Produktes und zeigt die polymodale Größenverteilung der Kautschukteilchen von 0,1 µm bis etwa 1,5 µm, jedoch mit mehr Lamellenstruktur.

### 7. Beispiel einer fortlaufenden (kontinuierlichen) Fahrweise.

Die Polymerisationsapparatur besteht aus zwei wandgängig gerührten, in Serie geschalteten Laborreaktoren. Der erste Reaktor hat ein Füllvolumen von 3 Liter, der zweite von 6 Liter. Zur besseren Durchmischung ist an beiden Reaktoren jeweils ein externer Loop mit eingebauten Statikmischern angebracht. Die Füllstände der Reaktoren werden durch Wiegen der Reaktoraufbauten kontrolliert. Die Reaktoren werden mit 70 % Füllvolumen betrieben; der erste Reaktor bei Normaldruck, der zweite bei etwa 0 bis 1,0 bar Überdruck. Die Reaktoren werden mit Polymerlösung aus dem Versuch des Beispiels 3 gefüllt. Der erste Reaktor wird auf 75°C, der zweite Reaktor auf 100°C geheizt.

In den ersten Reaktor werden kontinuierlich über getrennte Einläufe die folgenden Dosierströme eindosiert:

| I. 889 ml/Stde. einer Mischung aus: | |
|---|---|
| 26,7 | Gew.-% Toluol |
| 12 | Gew.-% Buna CB HX 502 C, gelöst |
| 44 | Gew.-% Styrol |
| 17 | Gew.-% Acrylnitril |
| 0,3 | Gew.% tert.-Dodecylmercaptan |

| II. 161 ml/Std. einer Mischung aus: | |
|---|---|
| 99,65 | Gew.-% Methylethylketon (2-Butanon) |
| 0,35 | Gew.-% tert.-Butylperpivalat |

Der stationäre Umsatz, bezogen auf Styrol und Acrylnitril, beträgt 42 Gew.-%.

Unter Konstanthaltung des Füllvolumes wird der Produktstrom aus dem ersten Reaktor in den zweiten geführt. In den zweiten Reaktor werden kontinuierlich eindosiert:

| III. 42 ml/Stde. einer Mischung aus: | |
|---|---|
| 97 Gew.-% | Methylethylketon (2-Butanon) |
| 3 Gew.-% | tert.-Dodecylmercaptan |

| IV. 242 ml/Stde. einer Mischung aus: | |
|---|---|
| 99,1 Gew.-% | Methylethylketon (2-Butanon) |
| 0,7 Gew.-% | tert.-Butylperoctoat |

Der unter Konstanthaltung des Füllgrades von 66 Vol% im zweiten Reaktor entnommende Polymersirup wird kontinuierlich durch einen 150 ml Wärmeaustauscher (mit heizbaren, innenliegenden Statik-Mischelementen vom Typ der Sulzer AG) geschickt und einer kontinuierlichen mehrstufigen Verdampferkaskade nach Stand der Technik von flüchtigen Bestandteilen befreit. Aus der Massebilanz errechnet sich ein Gesamtumsatz von 81 Gew.-%, bezogen auf Styrol und Acrylnitril. Der Kautschukgehalt beträgt 20 Gew.-%. Durch Abmischen mit in Masse hergestelltem Polystyrol-co-Acrylnitril mit einem Acrylnitrilgehalt von 28 Gew.-% auf einem Mischextruder wird der Kautschukgehalt auf 14 Gew.-% abgesenkt.

| Prüfergebnisse gemessen an Spritzgußkörpern: | |
|---|---|
| Massetemperatur: 230°C | |
| Werzeugtemperatur: 60°C | |
| Einspritzzeit: 3,0 Sek. | |
| Reflektometerwert (T_{w}- 70°/20°C) | 25 |
| aₖ-IZOD (kJ/m²) 23°C | 30 |
| " -40°C | 16 |
| MVI (10/220) | 16 |
| Vicat B/120 | 104 |
| Härte (MPa) | 98 |

### 8. Beispiel der Copolymerisation mit N-Phenyl-maleinimid

128 g cis-Polybutadien Buna HX 502 C werden in 400 g Toluol bei 60°C gelöst und mit 414 g Styrol versetzt. Man rührt nun 188 g Acrylnitril und 1,2 g tert.-Dodecylmercaptan ein und dosiert bei 75°C aus zwei getrennten Tropftrichtern die Lösungen von
a) 25 g Toluol mit 0,3 g tert.-Butylperpivalat,
b) 100 g Toluol, 25 g Methylethylketon und 23,5 g N-Phenylmaleinimid innerhalb von 1 Stde. ein. Der Umsatz, bezogen auf Styrol und Acrylnitril und N-Phenyl-maleinimid beträgt jetzt 35 Gew.-%. Nun wird eine Lösung von
c) 43,7 g N-Phenyl-maleinimid in 400 g Methylethylketon (2-Butanon) und 0,4 g tert.-Butylperoctoat
innerhalb von 4 Stdn. bei 80°C unter Rühren eingetropft und 4 Stdn. bei 87°C nachgerührt.

Der Umsatz, bezogen auf Styrol, Acrylnitril, N-Phenylmaleinimid beträgt 77 %, der Kautschukgehalt im Polymerisat 19 Gew.-%. Die Polymerlösung wird in Schalen ausgegossen, zu Fellen getrocknet und diese unter Abmischen mit technisch in Masse hergestelltem Polystyrol-co-Acrylnitril mit 28 Gew.-% Acrylnitril auf einem Entgasungsextruder auf einen Kautschukgehalt von 16 Gew.-% verdünnt und granuliert.

| Bedingungen des Spritzgusses zu Normklein-Prüfstäben: | |
|---|---|
| Massetemperatur | 270°C |
| Werkzeugtemperatur | 60°C |
| Einspritzzeit | 3,0 Sek. |

Im Torsionsschwingungendiagramm wird eine Glastemperatur der Harzmatrix von 119°C ermittel.
aₖ-IZOD (kJ/m²) 23°C: 27

### 9. Beispiel der Copolymerisation mit 2-Ethyl-6-methyl-phenyl-maleinimid

72 g cis-Polybutadien Buna HX 502 werden in 150 g Toluol in Gegenwart von 0,07 g Di-tert.-Butylphenol, IONOL® als Antioxidans unter Zusatz von 2,6 g tert.-Dodecylmercaptan bei Raumtemperatur gelöst. Man rührt bei 60°C 148 g Acrylnitril ein und dosiert bei 75°C die Lösungen von
a) 18,55 g 2-Ethyl-6-methyl-phenyl-maleinimid
   128 ml Butanon-2
   0,54 g tert.-Butylperpivalat
   innerhalb von 10 Minuten ein.
   Nun wird innerhalb von 4 Stunden mit logerithmisch abnehmender Zulaufgeschwindigkeit die Lösung von
b) 34,5 g 2-Ethyl-6-methyl-phenyl-maleinimid
   400 ml Butanon-2
   0,79 g tert.-Butylperpivalat
   eingerührt und die Reaktortemperatur langsam auf 87°C angehoben. Man rührt noch 4 Stunden bei 87°C nach.
   Man setzt nun die Lösung von
c) 0,6 g IRGANOX 1076®
   4,8 g Paraffin-Öl
   10 ml 2-Butanon
zu und gießt die Polymerlösung auf Abdampfschalen. Das Polymer wird bei Raumtemperatur zu Fellen getrocknet, zerkleinert, von Lösungsmittel und Restmonomeren in einem Gemisch aus 4 Teilen Methanol und 1 Teil Wasser befreit, auf dem Entgasungsextruder nachbehandelt und granuliert.

Die Spritzgußrohlinge wurden analog zu Beispiel Nr. 8 hergestellt.

| | |
|---|---|
| Glasübergangstemperatur (Torsionsschwingungsversuch) | 118°C |
| aₖ-IZOD (kJ/m²) 23°C | 28 |

## Patentansprüche

1. Verfahren zur Herstellung von Kautschuk schlagzäh modifizierten ABS-Formmassen durch nichtwässrige Polymerisation, dadurch gekennzeichnet,
daß man mit Hilfe von mindestens zwei verschiedenen Lösungsmitteln nämlich
(A) einem aliphatischen (C₄-C₁₀), cycloaliphatischen und/oder aromatischen Kohlenwasserstoff
und
(B) einem aliphatischen (C₁-C₈) oder cycloaliphatischen Alkohol, Keton, Ether, Ester und/oder Nitril
1. 90 bis 20 Gewichsteile Monoalkenylaromat-Monomere oder eine Mischung von Äquivalenten daraus,
2. 10 bis 50 Gewichsteile ethylenisch ungesättigtes Nitril-Monomer oder einer Mischung von Äquivalenten daraus,
und
3. gegebenenfalls 0 bis 30 Gewichtsteile eines weiteren, mit 1. und 2. kopolymerisierenden Vinyl- und/oder Fumar-, und/oder Itacon-Monomer oder eine Mischung von Äquivalenten hieraus
in Gegenwart von
4. 6 bis 50 Gewichsteilen eines löslichen, gelfreien, vorgebildeten Polybutadien mit hohem cis-1,2-Anteil von 8 bis 14%, bezogen auf die Doppelbindungen, oder deren Styrol-Copolymere in gerührter Lösung von
5. 18 bis 200 Gewichsteilen eines Lösungsmittels oder eines Lösungsmittelgemisches aus der Gruppe (A)
6. bis zu einem Monomerenumsatz, bezogen auf Summe der polymerisierten Monomeren 1. bis 3. von bis zu maximal 45 Gew.% radikalisch initiiert polymerisiert,
7. 18 bis 450 Gewichsteile eines Lösungsmittels oder eines Lösungsmittelgemisches aus der Gruppe (B) zeitlich oder örtlich getrennt von der Maßgabe 5 zusetzt
und
8. die radikalisch initiierte Polymerisation im weiteren Schritt bis zu einem Monomerenumsatz, bezogen auf die Summe der polymerisierenden Monomere 1. bis 3. von 30 bis 99 Gew.% unter Durchmischen weiter führt.

2. Verfahren nach Anspruch 1, dadurch gekennzeichnet, daß die Polymerisation als Satzansatz betrieben wird.

3. Verfahren nach Anspruch 1, dadurch gekennzeichnet, daß die Polymerisation absatzweise nach Zulaufverfahren betrieben wird mit der Maßnahme des örtlich getrennten Zulaufes von 4./5. mit Lösungsmittel (A) und 7. mit Lösungsmittel (B).

4. Verfahren nach Anspruch 1., dadurch gekennzeichnet, daß die Polymerisation fortlaufend (kontinuierlich) betrieben wird mit der Maßnahme des örtlich getrennten Zulaufes von 4./5. mit Lösungsmittel (A) und 7. mit Lösungsmittel (B).

## Claims

1. A process for preparing rubber, impact-resistant, modified ABS moulding compositions by non-aqueous polymerisation, characterised in that,
with the aid of at least two different solvents, these being
(A) an aliphatic (C₄-C₁₀), cycloaliphatic and/or aromatic hydrocarbon
and
(B) an aliphatic (C₁-C₈) or cycloaliphatic alcohol, ketone, ether, ester and/or nitrile,
1. 90 to 20 parts by weight of monoalkenylaromatic monomers or a mixture of equivalents thereof,
2. 10 to 50 parts by weight of ethylenically unsaturated nitrile monomers or a mixture of equivalents thereof,
and
3. optionally 0 to 30 parts by weight of a further vinyl and/or fumaric and/or itaconic monomer which can be copolymerised with 1 and 2, or a mixture of equivalents thereof,
are polymerised by radical initiation in the presence of
4. 6 to 50 parts by weight of a soluble, gel-free, pre-formed
polybutadiene with a high cis-1,2 fraction of 8 to 14%, with reference to the double bonds, or styrene copolymers thereof
in a stirred solution of
5. 18 to 200 parts by weight of a solvent or a solvent mixture from group (A)
6. up to a monomer conversion of at most 45 wt.%, with respect to the sum of monomers 1 to 3 polymerised,
7. 18 to 450 parts by weight of a solvent or a solvent mixture from group (B) are added at a separate time or in a separate location from the items listed under 5
and
8. radically initiated polymerisation is continued in a further stage up to a monomer conversion, with respect to the sum of monomers 1 to 3 being polymerised, of 30 to 99 wt.% with thorough mixing.

2. A process according to Claim 1, characterised in that polymerisation is performed as a batch process.

3. A process according to Claim 1, characterised in that polymerisation is performed batchwise as an inflow process by providing physically separated inlets for items 4/5 with solvent (A) and item 7 with solvent (B).

4. A process according to Claim 1, characterised in that polymerisation is performed as an ongoing (continuous) process by providing physically separated inlets for items 4/5 with solvent (A) and item 7 with solvent (B).

## Revendications

1. Procédé pour la préparation de matières à mouler de type ABS modifiées par du caoutchouc pour leur conférer une résistance élevée aux chocs, par polymérisation non aqueuse,
caractérisé en ce qu'on soumet à une polymérisation déclenchée par voie radicalaire, à l'aide d'au moins deux solvants différents, plus précisément
(A) un hydrocarbure aliphatique en C₄-C₁₀, cycloaliphatique et/ou aromatique
et
(B) un alcool aliphatique en C₁-C₈ ou cycloaliphatique, une cétone, un éther, un ester et/ou un nitrile,
1. de 90 à 20 parties en poids de monomères de composés aromatiques monoalcénylés ou un mélange d'équivalents de ces derniers,
2. de 10 à 50 parties en poids d'un monomère de nitrile à insaturation éthylénique ou d'un mélange d'équivalents de ce dernier, et
3. le cas échéant, de 0 à 30 parties en poids d'un monomère de type vinylique et/ou fumarique et/ou itaconique supplémentaire, qui copolymérise avec 1. et 2., ou encore d'un mélange d'équivalents de ces derniers,
en présence de
4. 6 à 50 parties en poids d'un polybutadiène préformé soluble et exempt de gel possédant une fraction cis-1,2 élevée de 8 à 14% rapportés aux liaisons doubles, ou de ses copolymères de styrène, dans une solution agitée de
5. 18 à 200 parties en poids d'un solvant ou d'un mélange de solvants du groupe (A),
6. jusqu'à ce que l'on obtienne une conversion des monomères, rapportée à la somme des monomères polymérisés 1. à 3., s'élevant au maximum à 45% en poids,
7. on procède à l'addition séparée dans le temps ou dans l'espace par rapport à la mesure 5, de 18 à 450 parties en poids d'un solvant ou d'un mélange de solvants du groupe (B)
et
8. dans une étape supplémentaire, on poursuit la polymérisation déclenchée par voie radicalaire jusqu'à ce que l'on obtienne une conversion des monomères, rapportée à la somme des monomères de polymérisation 1. à 3., de 30 à 99% en poids, dans des conditions de malaxage.

2. Procédé selon la revendication 1, caractérisé en ce qu'on effectue la polymérisation sous forme d'une préparation par lots.

3. Procédé selon la revendication 1, caractérisé en ce qu'on effectue la polymérisation en discontinu conformément au procédé par addition avec la mesure de l'introduction séparée dans l'espace de 4./5. avec le solvant (A) et de 7. avec le solvant (B).

4. Procédé selon la revendication 1, caractérisé en ce qu'on effectue la polymérisation de manière consécutive (en continu) avec la mesure de l'introduction séparée dans l'espace de 4./5. avec le solvant (A) et de 7. avec le solvant (B).
